(19) **Europäisches Patentamt**

**European Patent Office**

**Office européen des brevets**

(11) **EP 1 364 524 B1**

(12) **EUROPEAN PATENT SPECIFICATION**

(45) Date of publication and mention
of the grant of the patent:
**06.07.2005 Bulletin 2005/27**

(51) Int Cl.⁷: **H04N 1/54**

(86) International application number:
**PCT/NL2002/000124**

(21) Application number: **02712537.6**

(22) Date of filing: **26.02.2002**

(87) International publication number:
**WO 2002/071739 (12.09.2002 Gazette 2002/37)**

(54) **METHOD FOR PRINTING A COLOUR IMAGE**

FARBBILDERZEUGUNGSVERFAHREN

PROCEDE D'IMPRESSION D'UNE IMAGE EN COULEUR

(84) Designated Contracting States:
**AT BE CH CY DE DK ES FI FR GB GR IE IT LI LU
MC NL PT SE TR**

(30) Priority: **02.03.2001 NL 1017480**

(43) Date of publication of application:
**26.11.2003 Bulletin 2003/48**

(60) Divisional application:
**05075691.5**

(73) Proprietor: **M.Y. Printech B.V.
4631 SZ Hoogerheide (NL)**

(72) Inventor: **ALDERLIEFSTE, Martin
NL-4631 GJ Hoogerheide (NL)**

(74) Representative: **Eveleens Maarse, Pieter
Arnold & Siedsma,
Advocaten en Octrooigemachtigden,
Sweelinckplein 1
2517 GK Den Haag (NL)**

(56) References cited:
**EP-A- 0 706 889         EP-A- 0 810 777
EP-A- 0 833 500         US-A- 5 892 891**

- **STEPHEN HERRON: "An Exploration of the
  Pantone Hexachrome Six-Color System
  Reproduced by Stochastic Screens" FOURTH
  COLOR IMAGING CONFERENCE, 19 - 22
  November 1996, pages 114-120, XP002182237
  AZ, US**

## Description

The present invention relates to a method for printing a colour image composed of at least one photographic image and at least one additional element, such as text, a logo or a colour background, using different colours.

The invention relates particularly to the printing of colour images, which are reproduced from originals when printing onto a material or substrate, for example on packaging of foodstuffs. The principle is based on the colours present in the originals being separated during reproduction into three primary colours (Cyan, Magenta and Yellow) and bringing these colours together again during printing. The inks with which the conventional full colour printing takes place are not ideal and, despite modern production methods, have the following shortcomings. They have too little brightness, they show too little saturation, and variation of the reproduction of colours takes place during the printing process. Because of these and other shortcomings amongst others, Black is added to the three primary colours.

In addition to photographic images, additional elements such as texts, logos and colour backgrounds are important for example on printed packaging. These elements are usually composed of bright colours with a high colour intensity. The primary printing colours do not have this colour range, while the brightness decreases sharply when the primary printing colours are mixed, a reason why special pigmented inks have been developed. A large ink stockroom is therefore necessary to enable printing according to the conventional method. Furthermore, between the printing of different colour images, the printing units must be cleaned and the printing plates of the press must be changed each time.

The object of the present invention is to improve the efficiency of the printing process as well as to optimize it.

The method defined in the introduction is therefore characterized in that a maximum of six different colours are used and that these colours consist of a first group composed of the three primary colours Cyan, Magenta and Yellow supplemented with Black and a second group composed of two special colours Orange and either Blue or Green, wherein the photographic image is printed using only colours from the first group and wherein the additional element of the colour image is printed substantially using colours from the second group.

With four basic printing colours Cyan, Magenta, Yellow and Black and two special colours Orange and either Blue or Green, any original image can be printed in a reproduction which is correct at least to the eye. In photographic images, the colour gamut with Cyan, Magenta, Yellow and Black is generally accepted, so that in the printing of the photographic images these basic printing colours can suffice. For additional elements, colours in the orange and blue-violet spectrum are difficult to reproduce and so two of the three special colours in the second group are used.

Otherwise it is noted from publication US 5,734,800 a six-colour printing system designated with the name Hexachrome is known, which uses six specially pigmented inks Cyan, Magenta, Yellow, Black, Orange and Green. Both photographic images and additional elements are printed using inks with these six colours. Hexachrome was specially developed to give the graphic designer a wider range of possibilities and to reduce the shortcomings of the printing process and printing inks. The correction of the low colour purity by using secondary colours and higher pigmentation of the inks gives a non-photographic effect with exaggerated colours in reproduced images, which is often perceived as unattractive.

According to a preferred method of the invention the colours from the second group are supplemented with one or more colours from the first group in the printing of additional elements. This enables a wider colour gamut for additional elements to be obtained.

In addition, the colours are preferably printed with a stochastic screen in order to reduce colour variation in a print run and to prevent interference from screen lines, which effect can occur in conventional screening.

During printing the colour sequence Black, Cyan, Magenta, Yellow, Blue or Green and finally Orange is preferred, such that dust on the material being printed has as little influence as possible on the final result.

The colour image to be printed is reproduced by scanning an original and subsequently forming a digital file, which comprises positioned reproduction values per colour. This is essentially a standard reproduction technique that is used. According to the invention, since only the photographic images are composed of the primary colours supplemented with black from the first group, only these image elements need to be reproduced. The special colours from the second group are only utilized for the additional elements. The digital file is supplemented with relevant information about additional elements in the colour image to be printed.

It is generally the case that the finer the screen, the higher the distortion during printing. Stochastic screening is so fine that great deviations begin to play a part. In order to obviate these deviations in the printed result, a correction takes place during conversion of the reproduction values in file to the plate reproduction values on printing plate. The stochastic reproduction can hereby be reduced to the level of a conventional screened reproduction.

Tests have shown that the correction can be substantially described with the following formula:

$$y = -100 \cdot (10^{1/a \cdot \log(1-x/100)} - 1)$$

wherein x = reproduction value in file (in %)

y = corrected value (in %)

a = factor dependent on colour and screen spacing.

In the correction of a grey value formed by a combination of the colours from the first group and a screen spacing of 20 μm, the above stated factor "a" amounts to about 1.8. The correction for the colours Cyan, Magenta, Yellow and Black can be described using the same formula.

The correction can be applied to the reproduction values in file, although this preferably takes place in the stage of plate exposing so existing files do not have to be changed.

After having analysed many hundreds of originals, it has been found that the colours Orange, Blue and Green with a colour definition according to CIElab of:

| 59.00 | 55.53 | 82.16 for Orange, |
| 28.61 | 19.13 | -61.54 for Blue, |
| 63.99 | -64.20 | 35.86 for Green |

and a colour tolerance of < ΔE 6.0 forming the colours of the second group, give a colour image printed of an arbitrary original which is correct at least to the eye. These special colours are only used for the additional elements.

Finally, the invention also relates to a colour medium for applying in the method. This colour medium comprises a special orange, green or blue pigment with colour definitions as given above. The colour medium can be an ink, a toner, a colour foil for use in for example (digital) proofing systems, or any other substance that is deposited onto a material or substrate to reproduce colour images.

The invention will be further elucidated with reference to the annexed drawings. In the drawings:

Figure 1 shows a graph in which colour variation is plotted against screen percentage,
Figure 2 shows a graph in which colour variation is plotted against colour composition,
Figure 3 shows a graph in which colour variation is plotted against colour difference when cardboard is the printed material,
Figure 4 shows a table with screen percentages for a grey value printed with conventional and stochastic screening, and the associated difference,
Figure 5 shows a graph in which plate reproduction curves for a grey value printed with a stochastic screen and a conventional screen are plotted, and
Figure 6 shows a graph in which a correction curve for a grey value is shown.

For the printing of for example packaging made of cardboard, designs are drafted which are constructed from photographic elements and additional elements, such as text to provide information about the product packed or a logo to indicate the origin of the product. To enable printing of such a design a digital file is formed in generally known manner by reproduction of the original. Per colour a printing plate is then manufactured with digital plate exposure using a stochastic screen. The printing plates are set in the printing press in a pre-determined colour sequence and the packaging can be printed.

According to the invention photographic elements of the originals are scanned and separated into the three primary colours Cyan, Magenta and Yellow supplemented with Black, while information about a special Orange and a special Blue or a special Green for printing of the additional elements is added to the scanned information in the digital file. The basic printing colours Cyan, Magenta, Yellow and Black cause the fewest variations of tone value during printing, so that photographic elements are only printed in these colours and the reproduction obtained is as natural as possible. This is not the case for additional elements, since these elements are usually composed of bright colours with a high colour intensity. The primary colours Cyan, Magenta and Yellow supplemented with Black cannot provide the required colour gamut, so that a special colour Orange and a special colour Blue or Green are applied to print additional elements. The main advantage obtained with the invention is that for printing of an arbitrary design a group of seven printing inks, from which a maximum of six are chosen, can suffice.

Printing takes place on a usual six-colour press, on which a fixed colour sequence can be employed as a result of a limited ink stockroom of seven colours. For some designs, only the printing plates for the special colour Blue must be exchanged for a printing plate for the special colour Green, and vice versa. Therefore the time for cleaning the printing units of the printing press can be considerably reduced. For each design a maximum of six printing plates and six printing units are necessary, whereas the printing units do not require cleaning when the design is changed since the same colour sequence and the same colours are used. Also the ink stockroom needs only seven different inks, while previously for instance in case of four different designs each printed in six colours, a total of 12 till 24 different inks were required.

After analysis of many designs it has been found that with the special colours mentioned below any design can be printed in a reproduction which is correct at least to the eye. A colour Orange with a colour definition according to CIElab of 59.00 55.53 82.16, a colour Blue with a colour definition according to CIElab of 28.61 19.13 -61.54 and a colour Green with a colour definition according to CIElab of 63.99 -64.20 35.86, measured with Techkon SP830 lambda D65 10° without varnish or lacquer, within a colour tolerance of < ΔE 6.0

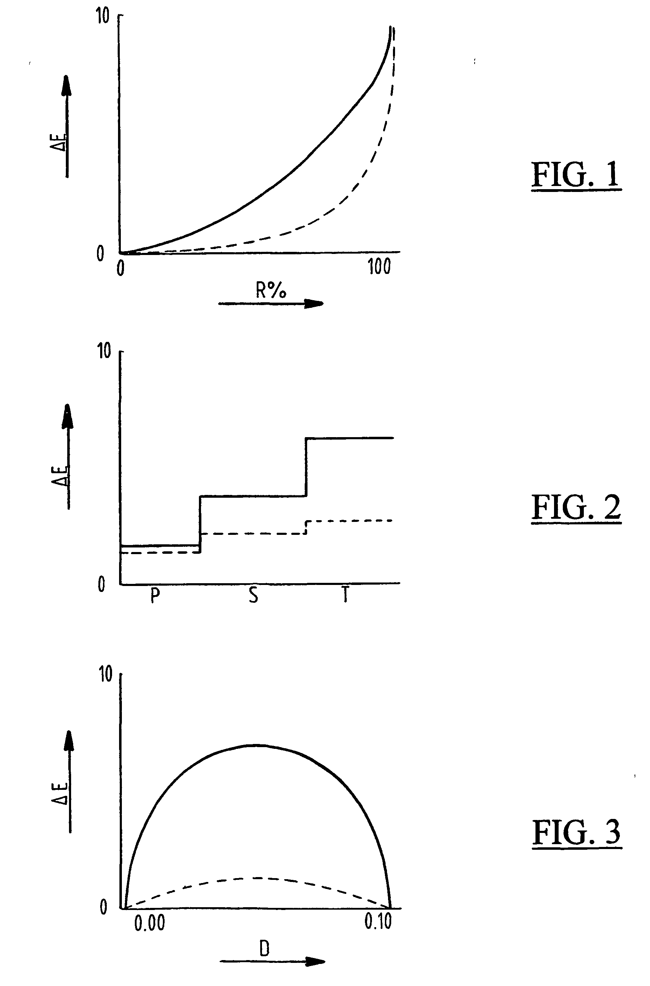

Figures 1-3 show colour variation in an average print run successively at increasing screen percentage (fig. 1), differences in colour composition (fig. 2) and colour differences in cardboard as printed material (fig. 3). In all figures the colour difference (ΔE) is plotted along the y-axis. Along the x-axis is plotted in fig. 1 the screen percentage (R), in fig. 2 the number of colours mixed (Primary, Secondary and Tertiary) and in fig. 3 the printing density (D). The colour variation is shown both for printing with a conventional screen (full line) and with a stochastic screen (dotted line). It can be clearly seen from fig. 1-3 that with the application of a stochastic screen a reduction in the colour variation in the print run can be obtained. However it has been found that the use of a stochastic screen results in a reproduction differing from the original.

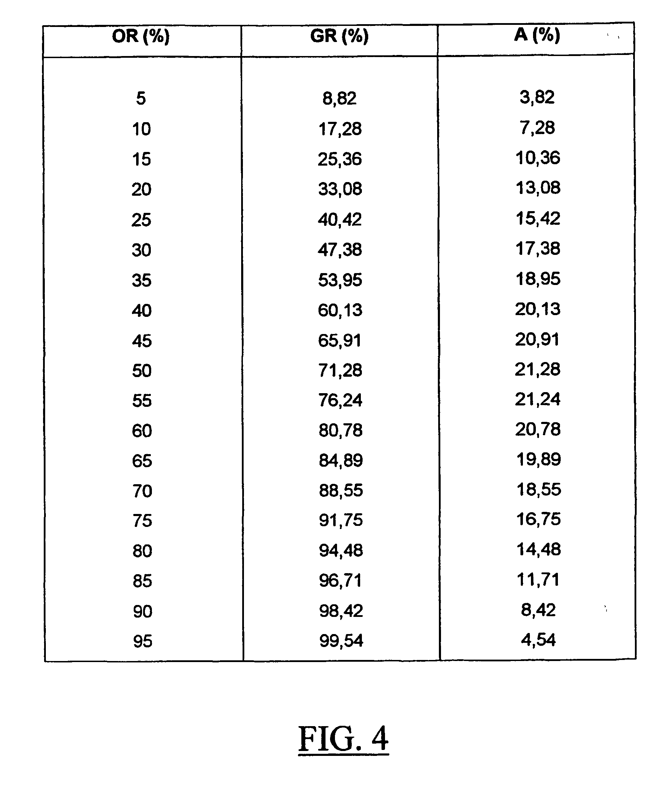

Below will be elucidated the manner in which a correction curve was determined so as to obtain a correct reproduction of the original, which curve will be used in the conversion of values in file to values on printing plate. The original was formed by a printed series of grey values with a (conventional) screen of 5 to 100% increasing in steps of 5%. The file was formed by said grey values. The printing plates were exposed using the digital file. The reproduced original was printed with a stochastic screen. The screen percentages of the reproduction were compared with the screen percentages of the original. The table of Figure 4 contains the original screen percentages (OR), the reproduced screen percentages (GR) and the difference (A) due to the use of a stochastic screen.

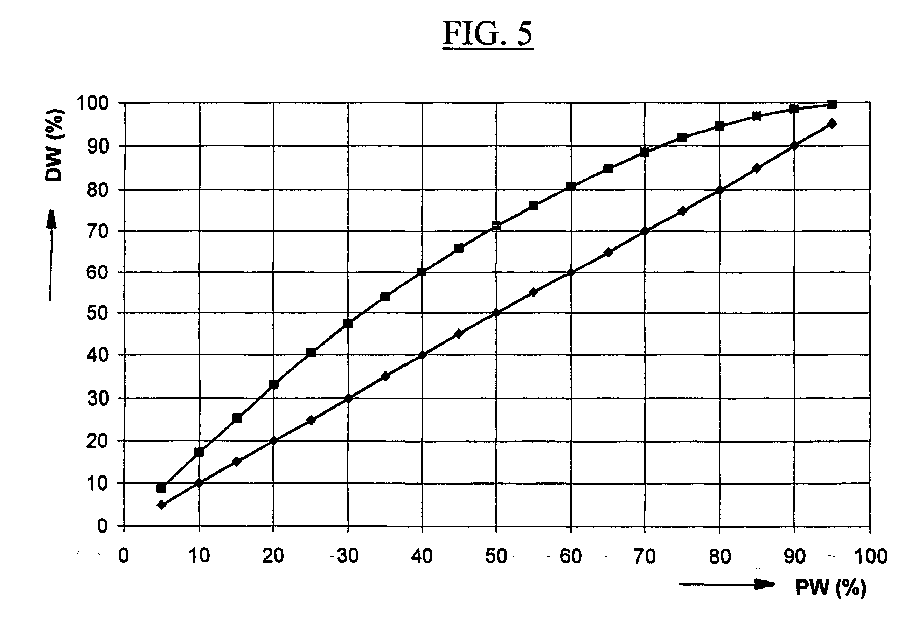

The values in the table of Figure 4 form plate reproduction curves for a grey value printed respectively with a stochastic screen and a conventional screen, which grey value is a combination of the four basic colours Cyan, Magenta, Yellow and Black. The values are plotted in the graph of Figure 5. Plotted along the y-axis is the printing reproduction value (DW) and along the x-axis the plate reproduction value (PW). In addition, the squares represent the stochastic values and the diamonds represent the conventional values. It can be clearly seen that, compared to a conventional screening, a stochastic screening displays considerable differences in the reproduced images. In order to match the stochastic reproduction of images with the conventional reproduction thereof, a correction will have to take place in the conversion of reproduction values in digital file to plate reproduction values on printing plate. This correction has been ascertained by tests and can be described with the following formula:

$$y = -100 \cdot (10^{1/a \cdot \log (1-x/100)} - 1)$$

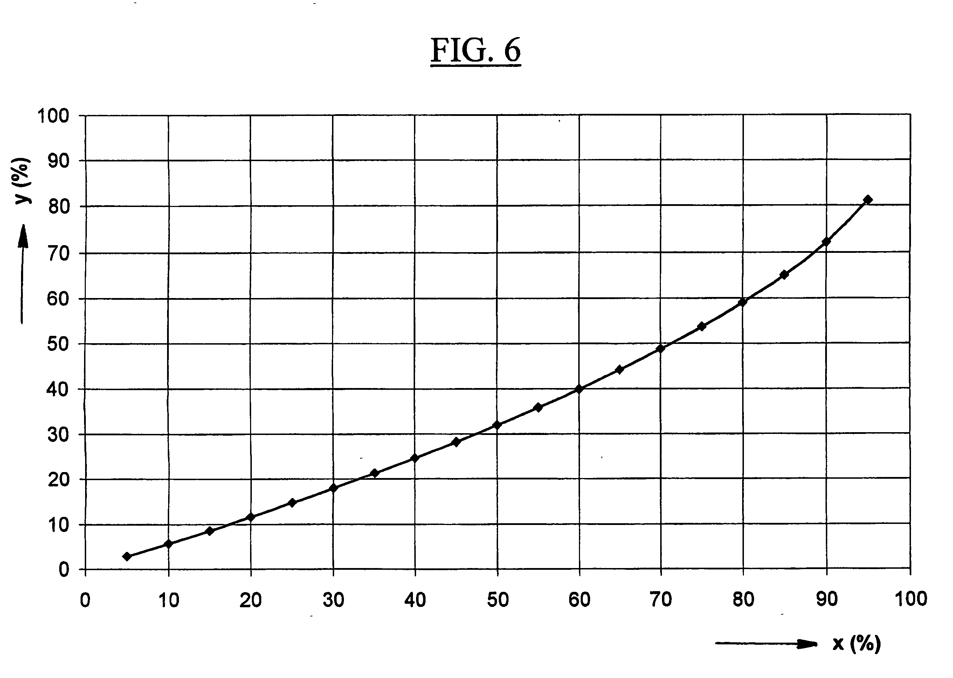

wherein x = reproduction value in file (in %)
y = corrected value (in %)
a = 1.8.
The factor "a" depends on colour and screen spacing. The above formula is displayed graphically in Figure 6.

The correction is preferably applied in the stage of exposing printing plates. The corrected value "y" in that case represents a plate reproduction value on printing plate. Another possibility is to correct the reproduction values in file themselves, wherein "y" represents a corrected reproduction value. This option is less recommended since existing digital files will then have to be modified.

A correction should actually take place per printing plate, i.e. per colour. It has however been found that with above given formula a result sufficient for the eye is possible if the colours Cyan, Magenta, Yellow and Black, plus special Orange and either special Blue or special Green are corrected with this formula.

In order to obtain an improvement of the printed result, the ink preferably contains UV-resistant and dispersion varnish-resistant additives.

According to the invention any design can be printed using four basic colours, i.e. Cyan, Magenta, Yellow and Black for photographic images and, in addition, two special colours, i.e. Orange and either Blue or Green for additional elements. Furthermore, printing preferably takes place using a stochastic screen in order to reduce colour variation in the print run and to prevent interference. After a correction has been applied practically the same reproduction will be obtained as when printing is carried out with a conventional screen.

## Claims

1. Method for printing a colour image composed of at least one photographic image and at least one additional element, such as text, a logo or a colour background, using different colours, **characterized in that** a maximum of six different colours are used and that these colours consist of a first group composed of the three primary colours Cyan, Magenta and Yellow supplemented with Black and a second group composed of two special colours Orange and either Blue or Green, wherein the photographic image is printed using only colours from the first group and wherein the additional element of the colour image is printed using colours from the second group.

2. Method according to claim 1, wherein different colours of ink are used for printing a colour image, wherein the photographic image is printed using only inks with colours from the first group and wherein the additional element of the colour image is printed using inks with colours from the second group.

3. Method as claimed in claim 1 or 2, wherein the colours from the second group are supplemented with one or more colours from the first group in the printing of additional elements.

4. Method as claimed in one of the preceding claims, wherein the colours are printed with a stochastic screen.

5. Method as claimed in one of the preceding claims, wherein during printing the colour sequence is Black, Cyan, Magenta, Yellow, Blue or Green and finally Orange.

6. Method as claimed in one of the preceding claims, wherein the colour image to be printed is reproduced from an original by scanning this latter and subsequently forming a digital file, which comprises positioned reproduction values per colour.

7. Method as claimed in claim 6, wherein a correction takes place during the conversion of reproduction values in digital file to plate reproduction values on printing plate for obtaining a reproduction which is at least correct to the eye.

8. Method as claimed in claim 7, wherein the correction is substantially described with the following formula:

$$y = -100 \cdot (10^{1/a \cdot \log (1-x/100)} - 1)$$

wherein x = reproduction value in file (in %)
   y = corrected value (in %)
   a = factor dependent on colour and screen spacing.

9. Method as claimed in claim 8, wherein the factor "a" amounts to about 1.8 for the correction of a grey value formed by a combination of the colours from the first group and a screen spacing of 20 $\mu$m.

10. Method as claimed in one of the claims 7-9, wherein the correction takes place in the exposure of the printing plates.

11. Method as claimed in one of the preceding claims, wherein for the colour Orange a colour is chosen with a colour definition according to CIElab of 59.00 55.53 82.16 and a colour tolerance of < $\Delta$E 6.0.

12. Method as claimed in one of the preceding claims, wherein for the colour Blue a colour is chosen with a colour definition according to CIElab of 28.61 19.13 -61.54 and a colour tolerance of < $\Delta$E 6.0.

13. Method as claimed in one of the preceding claims, wherein for the colour Green a colour is chosen with a colour definition according to CIElab of 63.99 -64.20 35.86 and a colour tolerance of < $\Delta$E 6.0.

14. A combination of two sets of colour media to be deposited onto a material or substrate for reproduction of a colour image, which is composed of at least one photographic image and at least one additional element, according to the method as claimed in one of the preceding claims, wherein the two sets consist of:

- a first set of colour media for reproduction of the photographic image comprising:

  - a colour medium comprising a primary Cyan colour pigment,
  - a colour medium comprising a primary Magenta colour pigment,
  - a colour medium comprising a primary Yellow colour pigment, and
  - a colour medium comprising a Black colour pigment,

- and a second set of colour media for reproduction of the additional element comprising:

  - a colour medium comprising an orange pigment for the purpose of obtaining the colour Orange with a colour definition according to CIElab of 59.00 55.53 82.16 and a colour tolerance of < $\Delta$E 6.0 and either
  - a colour medium comprising a blue pigment for the purpose of obtaining the colour Blue with a colour definition according to CIElab of 28.61 19.13 -61.54 and a colour tolerance of < $\Delta$E 6.0 or
  - a colour medium comprising a green pigment for the purpose of obtaining the colour Green with a colour definition according to CIElab of 63.99 -64.20 35.86 and a colour tolerance of < $\Delta$E 6.0.

15. The combination of two sets of colour media according to claim 14, wherein the colour medium is an ink.

16. The combination of two sets of colour media according to claim 14, wherein the colour medium is a toner.

17. The combination of two sets of colour media according to claim 14, wherein the colour medium is a colour foil.


**Patentansprüche**

1. Verfahren zum Drucken eines Farbbilds, welches aus zumindest einem fotografischen Bild und zumindest einem zusätzlichen Element besteht, beispielsweise Text, einem Logo oder einem Farbhintergrund, wobei unterschiedliche Farben verwendet werden,
   **dadurch gekennzeichnet, dass,**

ein Maximum von sechs unterschiedlichen Farben verwendet wird und dass diese Farben aus einer ersten Gruppe bestehen, die aus den drei Primärfarben zyan, magenta und gelb zusammengesetzt sind, welche mit schwarz ergänzt sind, und aus einer zweiten Gruppe, die aus zwei Spezialfarben orange und entweder blau oder grün zusammengesetzt ist, wobei das fotografische Bild unter Verwendung lediglich von Farben von der ersten Gruppe gedruckt wird und wobei das zusätzliche Element des Farbbilds unter Verwendung von Farben von der zweiten Gruppe gedruckt wird.

2. Verfahren nach Anspruch 1, wobei unterschiedliche Tintenfarben zum Drucken eines Farbbilds verwendet werden, wobei das fotografische Bild lediglich unter Verwendung von Tinten mit Farben von der ersten Gruppe gedruckt wird und wobei das zusätzliche Element des Farbbilds unter Verwendung von Tinten von der zweiten Gruppe gedruckt wird.

3. Verfahren nach Anspruch 1 oder 2, wobei die Farben von der zweiten Gruppe mit einer oder mehreren Farben von der ersten Gruppe beim Drucken von zusätzlichen Elementen ergänzt werden.

4. Verfahren nach einem der vorhergehenden Ansprüche, wobei die Farben mit einem stochastischen Raster gedruckt werden.

5. Verfahren nach einem der vorhergehenden Ansprüche, wobei während des Druckens die Farbsequenz schwarz, zyan, magenta, gelb, blau oder grün und schließlich orange ist.

6. Verfahren nach einem der vorhergehenden Ansprüche, wobei das zu druckende Farbbild von einem Original durch Scannen des letzteren und durch nachfolgendes Bilden einer Digitaldatei reproduziert wird, welche Positions-Reproduktionswerte pro Farbe umfasst.

7. Verfahren nach Anspruch 6, wobei eine Korrektur während der Umsetzung von Reproduktionswerten in der Digitaldatei auf Plattenreproduktionswerte auf einer Druckplatte stattfindet, um eine Reproduktion zu erlangen, welche zumindest für das Auge korrekt ist.

8. Verfahren nach Anspruch 7, wobei die Korrektur im Wesentlichen durch die folgende Formel beschrieben wird:

$$y = -100 \cdot (10^{1/a \log(1-x/100)} - 1)$$

wobei x = Reproduktionswert in Datei (in %)
y = Korrekturwert (in %)

a = Faktor in Abhängigkeit von Farbe und Rasterabstand

9. Verfahren nach Anspruch 8, wobei der Faktor "a" bis ungefähr 1,8 für die Korrektur eines Grauwerts, der durch eine Kombination der Farben von der ersten Gruppe gebildet wird, und einen Rasterabstand von 20 µm beträgt.

10. Verfahren nach einem der Ansprüche 7 bis 9, wobei die Korrektur bei der Belichtung der Druckplatten stattfindet.

11. Verfahren nach einem der vorhergehenden Ansprüche, wobei für die Farbe orange eine Farbe mit einer Farbdifinition gemäß CIElab von 59.00, 55.53, 82.16 und einer Farbtoleranz von <ΔE 6,0 gewählt wird.

12. Verfahren nach einem der vorhergehenden Ansprüche, wobei für die Farbe blau eine Farbe mit einer Farbdifinition gemäß CIElab von 28.61, 19.13,-61.54 und einer Farbtoleranz von <ΔE 6,0 gewählt wird.

13. Verfahren nach einem der vorhergehenden Ansprüche, wobei für die Farbe grun eine Farbe mit einer Farbdifinition gemäß CIElab von 63.99, -64.20, 35.86 und einer Farbtoleranz von <ΔE 6,0 gewählt wird

14. Kombination von zwei Sätzen von Farbmedien, die auf einem Material oder Substrat abzulagern sind, um ein Farbbild zu reproduzieren, welches aus zumindest einem fotografischen Bild und zumindest einem Zusatzelement besteht, gemäß dem Verfahren nach einem der vorhergehenden Ansprüche, wobei die zwei Sätze bestehen aus:

einem ersten Satz von Farbmedien zur Reproduktion des fotografischen Bilds, der aufweist:

ein Farbmedium, welches einen Zyan-Primärfarbstoff aufweist,
ein Farbmedium, welches einen Magenta-Primärfarbstoff aufweist,
ein Farbmedium, welches einen Gelb-Primärfarbstoff aufweist, und
ein Farbmedium, welches einen Schwarz-Farbstoff aufweist,

und einem zweiten Satz von Farbmedien zur Reproduktion des Zusatzelements, der aufweist:

ein Farbmedium, welches einen Orange-Farbstoff für den Zweck zum Erlangen der Farbe orange mit einer Farbdifinition gemäß CIElab von 59. 00. 55.53. 82.16 und einer Farbtoleranz von <ΔE6.0 aufweist, und entweder

ein Farbmedium, welches einen Blau-Farbstoff für den Zweck zum Erlangen der Farbe blau mit einer Farbdefinition gemäß CIElab von 28.61. 19.13. -61.54 und einer Farbtoleranz von <ΔE 6.0 aufweist, oder

ein Farbmedium, welches einen Grün-Farbstoff für den Zweck zum Erlangen der Farbe grün mit einer Farbdifinition gemäß CIElab von 63.99. -64.20. 35.86 und einer Farbtoleranz von <ΔE 6.0 aufweist.

15. Kombination von zwei Sätzen von Farbmedien nach Anspruch 14, wobei das Farbmedium eine Tinte ist.

16. Kombination von zwei Sätzen von Farbmedien nach Anspruch 14, wobei das Farbmedium ein Toner ist.

17. Kombination von zwei Sätzen von Farbmedien nach Anspruch 14, wobei das Farbmedium eine Farbfolie ist.

**Revendications**

1. Procédé pour imprimer une image en couleur composée d'au moins une image photographique et d'au moins un élément supplémentaire, tel que du texte, un logo ou un fond en couleur, en utilisant de différentes couleurs, **caractérisé en ce qu'**un maximum de six couleurs différentes est utilisé et que ces couleurs comprennent un premier groupe composé des trois couleurs primaires cyan, magenta et jaune complétées par le noir et un second groupe composé de deux couleurs particulières orange et soit bleu, soit vert, dans lequel l'image photographique est imprimée en n'utilisant que des couleurs provenant du premier groupe et dans lequel l'élément supplémentaire de l'image en couleur est imprimé en utilisant des couleurs provenant du second groupe.

2. Procédé selon la revendication 1, dans lequel différentes couleurs d'encre sont utilisées pour imprimer une image en couleur, dans lequel l'image photographique est imprimée en n'utilisant que des encres avec des couleurs provenant du premier groupe et dans lequel l'élément supplémentaire de l'image en couleur est imprimé en utilisant des encres avec des couleurs provenant du second groupe.

3. Procédé selon la revendication 1 ou 2, dans lequel les couleurs provenant du second groupe sont complétées par une ou plusieurs couleurs provenant du premier groupe lors de l'impression des éléments supplémentaires.

4. Procédé selon l'une quelconque des revendications précédentes, dans lequel les couleurs sont imprimées avec un écran stochastique.

5. Procédé selon l'une quelconque des revendications précédentes, dans lequel, lors de l'impression, la séquence de couleurs est noir, cyan, magenta, jaune, bleu ou vert et enfin orange.

6. Procédé selon l'une quelconque des revendications précédentes, dans lequel l'image en couleur devant être imprimée est reproduite à partir d'un original en scannant ce dernier et par la suite en formant un fichier numérique, qui comprend des valeurs de reproduction positionnées par couleur.

7. Procédé selon la revendication 6, dans lequel une correction a lieu lors de la conversion de valeurs de reproduction dans le fichier numérique en valeurs de reproduction de cliché sur une plaque d'impression pour obtenir une reproduction qui soit au moins correcte à l'oeil.

8. Procédé selon la revendication 7, dans lequel la correction est sensiblement décrite avec la formule suivante :

$$y = -100 \cdot (10^{1/a \cdot \log(1-x/100)} - 1)$$

dans laquelle x = la valeur de reproduction dans le fichier (en %)

y = la valeur corrigée (en %)

a = le facteur dépendant de la couleur et de l'espacement à l'écran.

9. Procédé selon la revendication 8, dans lequel le facteur « a » s'élève à 1,8 environ pour la correction d'un niveau de gris formé par une combinaison des couleurs provenant du premier groupe et d'un espacement à l'écran de 20 μm.

10. Procédé selon l'une quelconque des revendications 7 à 9, dans lequel la correction a lieu lors de l'exposition des plaques d'impression.

11. Procédé selon l'une quelconque des revendications précédentes, dans lequel, pour la couleur orange, une couleur est choisie avec une définition de couleur selon CIELab de 59.00 55.53 82.16 et une tolérance de couleur inférieure à ΔE 6,0.

12. Procédé selon l'une quelconque des revendications précédentes, dans lequel, pour la couleur bleue, une couleur est choisie avec une définition de couleur selon CIELab de 28,61 19.13 -61.54 et une tolérance de couleur inférieure à ΔE 6.0.

13. Procédé selon l'une quelconque des revendications précédentes, dans lequel, pour la couleur verte, une couleur est choisie avec une définition de couleur selon CIELab de 63.99 -64.20 35.86 et une tolérance de couleur inférieure à ΔE 6.0.

14. Combinaison de deux ensembles de milieux colorés devant être déposés sur un matériau ou un substrat pour la reproduction d'une image en couleur, qui est composée d'au moins une image photographique et d'au moins un élément supplémentaire, selon le procédé revendiqué selon l'une des revendications précédentes, dans laquelle les deux ensembles comprennent :

   - un premier ensemble de milieux colorés pour la reproduction de l'image photographique comprenant :

      - un milieu coloré comprenant un pigment de couleur cyan primaire,
      - un milieu coloré comprenant un pigment de couleur magenta primaire,
      - un milieu coloré comprenant un pigment de couleur jaune primaire, et
      - un milieu coloré comprenant un pigment de couleur noire,

   - et un second ensemble de milieux colorés pour la reproduction de l'élément supplémentaire comprenant :

      - un milieu coloré comprenant un pigment orange dans le but d'obtenir la couleur orange avec une définition de couleur selon CIELab de 59.00 55.53 82.16 et une tolérance de couleur inférieure à ΔE 6.0 et soit
      - un milieu coloré comprenant un pigment bleu dans le but d'obtenir la couleur bleue avec une définition de couleur selon CIELab de 28.61 19.13 -61.54 et une tolérance de couleur inférieure à ΔE 6.0, soit
      - un milieu coloré comprenant un pigment vert dans le but d'obtenir la couleur verte avec une définition de couleur selon CIELab de 63.99 -64.20 35.86 et une tolérance de couleur inférieure à ΔE 6.0.

15. Combinaison de deux ensembles de milieux colorés selon la revendication 14, dans laquelle le milieu coloré est une encre.

16. Combinaison de deux ensembles de milieux colorés selon la revendication 14, dans laquelle le milieu coloré est un toner.

17. Combinaison de deux ensembles de milieux colorés selon la revendication 14, dans laquelle le milieu coloré est un film coloré.

FIG. 1

FIG. 2

FIG. 3

| OR (%) | GR (%) | A (%) |
|--------|--------|-------|
| 5 | 8,82 | 3,82 |
| 10 | 17,28 | 7,28 |
| 15 | 25,36 | 10,36 |
| 20 | 33,08 | 13,08 |
| 25 | 40,42 | 15,42 |
| 30 | 47,38 | 17,38 |
| 35 | 53,95 | 18,95 |
| 40 | 60,13 | 20,13 |
| 45 | 65,91 | 20,91 |
| 50 | 71,28 | 21,28 |
| 55 | 76,24 | 21,24 |
| 60 | 80,78 | 20,78 |
| 65 | 84,89 | 19,89 |
| 70 | 88,55 | 18,55 |
| 75 | 91,75 | 16,75 |
| 80 | 94,48 | 14,48 |
| 85 | 96,71 | 11,71 |
| 90 | 98,42 | 8,42 |
| 95 | 99,54 | 4,54 |

## FIG. 4

FIG. 5

11

FIG. 6